# EUROPEAN PATENT SPECIFICATION

(11) **EP 2 871 975 B1**
(45) Date of publication and mention of the grant of the patent: **06.04.2016**
(21) Application number: 13731772.3
(22) Date of filing: 26.06.2013
(51) Int. Cl.: A23L 29/231, A23L 29/256, A23L 29/269, A23L 19/00, A23L 27/60, A23L 23/00, A23L 23/10

(54) **GELLED FOOD CONCENTRATE COMPRISING PECTIN GEL**
GELFÖRMIGES NAHRUNGSMITTELKONZENTRAT ENTHALTEND EIN PEKTINGEL
CONCENTRÉ ALIMENTAIRE GÉLIFIÉ CONTENANT UN GEL DE LA PECTINE

(30) Priority: 13.07.2012 EP 12176416
(43) Date of publication of application: 20.05.2015
(73) Proprietor: Unilever N.V., 3013 AL Rotterdam (NL); Unilever PLC, London, Greater London EC4Y 0DY (GB)
(72) Inventor: POPP, Alois, Konrad, NL-3133 AT Vlaardingen (NL); SILVA PAES, Sabrina, NL-3133 AT Vlaardingen (NL); VREEKER, Robert, NL-3133 AT Vlaardingen (NL)
(74) Representative: Tjon, Hon Kong Guno
(86) International application number: PCT/EP2013/063357
(87) International publication number: WO 2014/009155

(56) References cited:
- EP-A1- 2 005 838
- EP-A1- 2 468 110
- WO-A1-00/08952
- WO-A1-2012/097918
- WO-A2-02/05658
- JP-A- 2004 129 596
- SANG-HO YOO ET AL: "Monovalent Salt-Induced Gelation of Enzymatically Deesterified Pectin", JOURNAL OF AGRICULTURAL AND FOOD CHEMISTRY, vol. 51, no. 25, 1 December 2003 (2003-12-01), pages 7410-7417, XP055038900, ISSN: 0021-8561, DOI: 10.1021/jf030152o
- LOOTENS D ET AL: "Influence of pH, Ca concentration, temperature and amidation on the gelation of low methoxyl pectin", FOOD HYDROCOLLOIDS, ELSEVIER BV, NL, vol. 17, no. 3, 1 January 2003 (2003-01-01), pages 237-244, XP002562210, ISSN: 0268-005X, DOI: 10.1016/S0268-005X(02)00056-5 [retrieved on 2003-03-13]

## Description

The present invention relates to a gelled food concentrate. It further relates to a process to prepare said gelled food concentrate. It further relates to the use of the gelled food concentrate to prepare a ready-to-eat end product like a soup, a sauce, or a gravy.

### Background of the invention

A convenient way of preparing a soup, a sauce or gravy is by diluting a concentrated product in water. In case the liquid savoury product is derived from a dry concentrated product containing starch, upon dilution of the concentrate in water, usually after applying heat, the starch becomes activated and provides a viscous liquid food product like a thickened sauce, a gravy or a soup. Traditional concentrates are dry concentrates, for example in the form of cubes or granules. A format of savoury food concentrates which is appreciated often by consumers, is a moist, non-liquid concentrate, in the form of a gel. A gel allows addition of-water containing or liquid ingredients, which contributes to the perception of freshness of the concentrate. EP2468110 describes a gelled food composition comprising "low-methoxy" pectin. WO2007/113111 discloses a savoury food composition comprising at least one pre-gelatinised starch and at least one cook-up starch. The texture may be liquid or may be a dry powder.
A savoury food composition has been described which provides binding activity upon dilution of the concentrate. WO2004/049822 discloses a shelf-stable fluid concentrated composition comprising starch dispersed in an aqueous basis wherein the starch is in an unswollen state. The viscosity of the product is lower than 1500 Pa.s and has a pourable or spoonable texture. Upon dilution in hot water the product forms a thickened liquid, like a sauce.
It was observed that the use of starch provides several undesired complications.

Given the conventional dilution rates, a relatively high amount of starch, e.g. 30 wt% should be present to provide the desired viscosity in the ready-to-eat end product resulting after dilution, such as for example a soup, a sauce or gravy. High amounts of starch result in less formulation flexibility, as less space is present for other ingredients. A high starch amount may result in a viscosity of the ingredient mixture, during preparation of the food concentrate, which might be too high, for example due to the high starch powder content. Because of such a high viscosity, mixing with conventional mixing devices might not be possible. Especially for a food concentrate in the form of a gel these relatively high amounts of starch are problematic, as the gel texture might be easily lost. For example, if heated during process, the product easily turns into a sticky paste which is too hard, which is difficult to remove from the packaging, and limits the possibility for unit dosing.
A further disadvantage of the use of starch is that the starch should not be activated (gelatinised) during production of the food concentrate, as in that case, most of its viscosity enhancing capacity is lost when the product is diluted and the concentrate forms lumps after dilution. This forms a complication when gelling agents are present which are responsible for its gel texture. Gelling agents are normally functionalised (activated) at relatively high temperatures (e.g. >60 °C), and heating of the product results in gelatinisation of the starch. Sterilisation or pasteurisation of starch-containing products forms a problem, as during such processes the starch becomes gelatinised. From a consumer perspective, starch might not be preferred as during dilution in hot water, heating of starch forms a risk for formation of lumps in the ready-to-eat end product.
Furthermore, the ready-to-eat end product comprising the starch needs to be cooked-up for some time, to activate the starch, in order to obtain the thickening effect of starch. This can be experienced as cumbersome by consumers and may form a quality risk, if heating is carried out too long or too short. In addition, the taste or texture (mouthfeel) of starch may often not be appreciated. Furthermore, consumption of starch results in an additional intake of calories, which is often not preferred by consumers. Finally, the presence of relatively high amounts of starch may result in an opaque appearance of the concentrated product, which may not be desired for some applications.
It was observed that the compositions from the art show several disadvantages. Concentrates as described in the art did not allow for easy unit dosing, as they were liquid. Many of them would not be considered as 'natural' by consumers, because of their dry appearance.

### Summary of the invention

Hence, there is a need in the art for a gelled food concentrate, which upon dilution in an aqueous liquid provides a viscous ready-to-eat end product, without the drawbacks mentioned above. The viscosity in the ready to eat product is preferably present at 20 and /or 50 degrees C, preferably at 20 and /or 50 and/or 70 degrees C. The gelled food concentrate should not be too hard to allow relatively easy removal from a packaging or easy dosing with a spoon. Furthermore, gelled food concentrate should allow for an efficient production process. This is especially important when unit dose formats are used. The production process is preferably relatively quick. A gelled food concentrate with a homogenous texture and ingredient distribution is desired. Surprisingly, these complications were overcome by a product according to the invention.

The present invention relates to a gelled food concentrate comprising:
- water
- a salt-sensitive gum,
- salt in an amount sufficient to keep the salt-sensitive gum in a salted-out state,
- gelling pectin, being all pectin with a degree of esterification of below 55, and wherein the gelling pectin is dissolved in the water.

In a further aspect, the invention relates to process to prepare a gelled food concentrate according to the invention, the process comprising the steps of:
a) providing a mixture comprising water and gelling pectin,
b) heating the mixture from step a),
c) adding salt, not being calcium salt,
d) adding salt sensitive gum,
e) solidifying,
f) packaging,
   to result in a gelled food concentrate.

In a further aspect, the present invention relates to the use of a gelled food concentrate according to the invention to prepare a gravy, a soup, or a sauce.

### Detailed description of the invention

### Gelled food concentrate

The food concentrate of the present invention is in the form of a semi-solid gel. Preferably, the gel is a self-sustaining gel. It is not a paste. A semi-solid gel is known to the person skilled in the art of gelled bouillon concentrates. A semi-solid gel texture allows the consumer of the food concentrate to remove the food concentrate from its packaging easily and in one piece. This is referred to in the field as unit dosing, an advantage shared with traditional, dry bouillon cubes. A semi-solid gel may allow making easy scoops for example with a spoon, which may be preferred for multi-dosage packagings. The semi-solid, preferably self-sustaining, gel texture is present at least at room temperature (20°C). The semi-solid gel texture prevents that the food flows apart, like a liquid or a paste, after or during removal from its packaging and allows it to maintain the shape, which at least to a certain extent reflects the shape the product had when present in its packaging, in this way allowing the desired unit-dosing. The gel texture is preferably not sticky such as a paste (for example tomato paste). The gel is preferably not very elastic, to allow easy scooping with for example a spoon and to allow easy dispersing of the gelled food concentrate. In the context of the present invention at least one of the challenges was to obtain the desired gel texture in a high-salt environment.

The food concentrate of the invention preferably shows a rheology wherein the elastic modulus (G') is higher than the viscous modulus (G"). The ratio elastic modulus (G') to viscous modulus (G") is preferably higher than 1, more preferably higher than 3, most preferably higher than 5 Pa. The elastic modulus (G') is preferably higher than 5 Pa, more preferably higher than 10 Pa, even more preferably higher than 20 Pa, even more preferably higher than 30 Pa, most preferably higher than 50 Pa. The elastic modulus (G') is preferably lower than 9000 Pa, more preferably lower than 5000 Pa, even more preferably lower than 3000 Pa, even more preferably lower than 2000 Pa, most preferably lower than 1000 Pa. In combination with these G' values, the viscous modulus (G") is preferably higher than 1, more preferably higher than 3 Pa, even more preferably higher than 5 Pa, most preferably higher than 10 Pa. The viscous modulus (G") is preferably lower than 1000 Pa, more preferably lower than 500 Pa, even more preferably lower than 300 Pa, even more preferably lower than 200 Pa, most preferably lower than 100 Pa . Elastic and viscous moduli are terms known in the art of rheology. They have been described for example in "Das Rheologie Handbuch, Thomas Mezger, Curt R. Vincentz-Verlag, Hannover, 2000".

The protocol for measuring the elastic and viscous modulus is as following:
- A state of the art rheometer such as the AR G2 (TA Instruments, New Castle, Delaware, USA) or Physica MCR 300 (Anton Paar GmbH, Graz, Austria) are suitable for this measurement;
- Parallel plates geometry, preferred plates with sandblasted surface
- Profile: Temperature sweep followed by time sweep test:
   a. Load the sample at 90-95 °C
   b. Cool from loading temperature to 20 °C at a rate of 5°C/min while measuring the Elastic modulus (G') and Viscous Modulus (G") at a strain of within the linear viscoselastic region (e.g. 0.5% strain, pre-determined by a strain sweep test) and a frequency of 1 Hz
   c. Keep at 20°C for 10 minutes while measuring G' and G" at the same strain and frequency conditions as during the cooling step b) (time sweep step);
- Elastic modulus (G') and Viscous Modulus (G") should be taken as the plateau values after 10 min at 20 °C (step c). If plateau values for G' and G" are not reached, allow more time for step c (for example, 20 min)

The gel texture can also, for example, be analysed by a texture analyser, as known in the art. The texture can be characterised for example using common techniques such as texture analysis of penetration or compression, as measured in with equipments such as a Texture Analyser (e.g. from Stable Microsystems^{™}) or a Universal testing machine (e.g. from Instron^{™}).

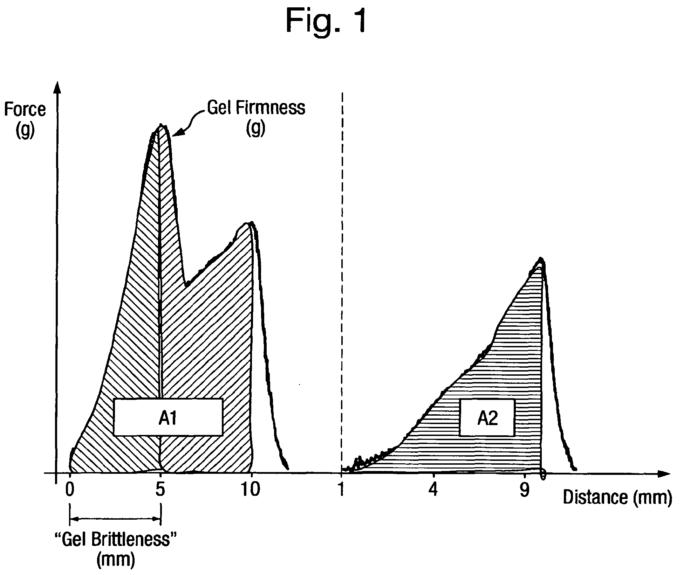

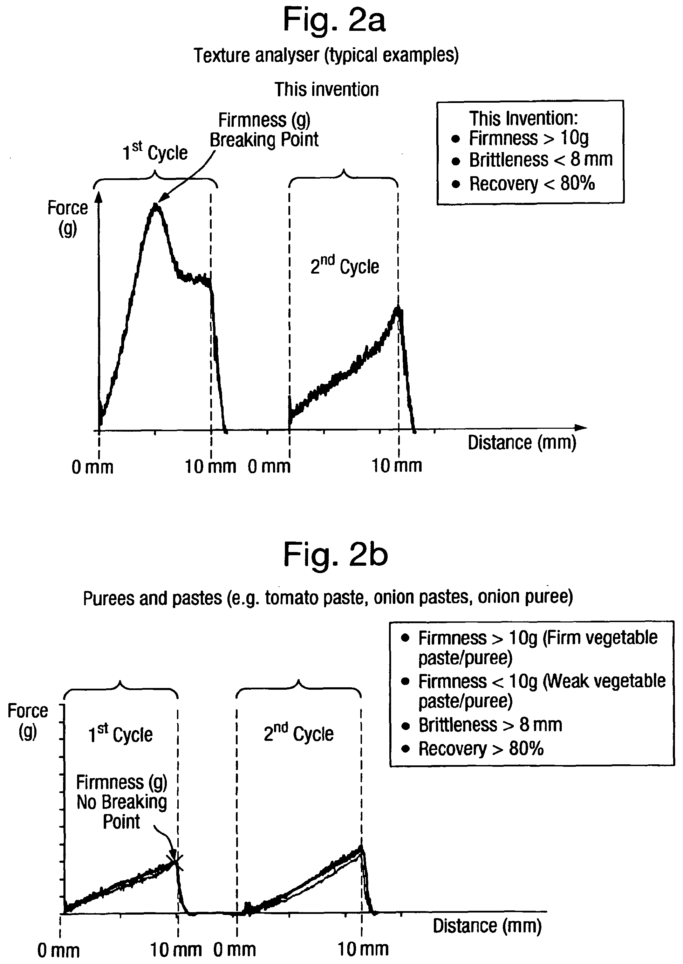

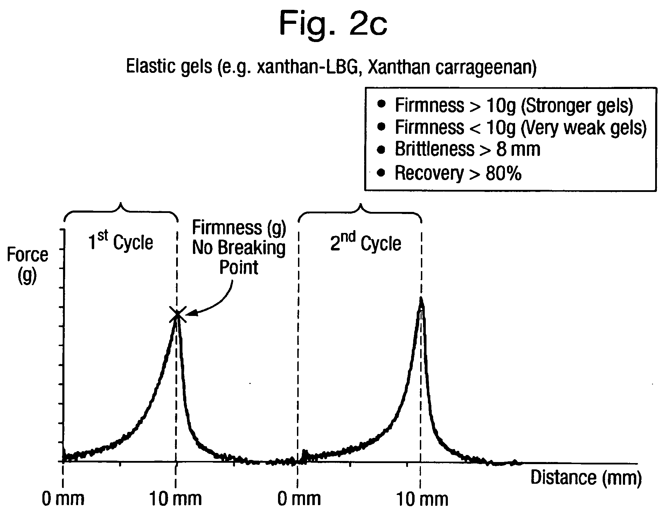

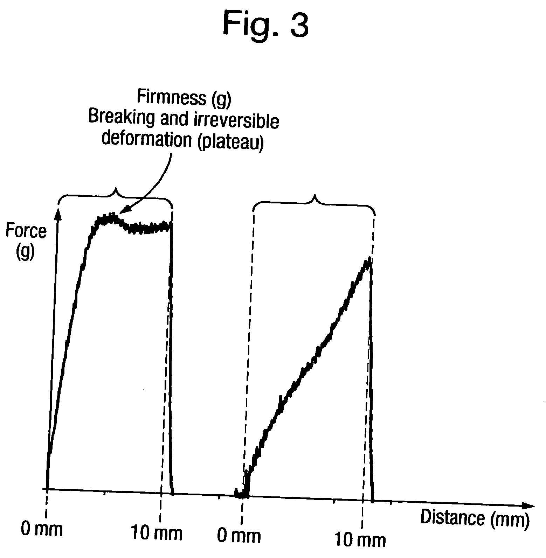

In a "penetration test", a plunger is forced into a composition and the force required for penetration of the composition is plotted against the distance (or time) of penetration into the composition at a pre-determined speed to a pre-determined depth of penetration. The plunger is then withdrawn. In the test used in the context of this invention a penetration test with two consecutive penetrations was used. If a composition is in the form of a (brittle) semi-solid gel (as preferred in this invention) it typically shows a breaking point (or irreversible deformation, e.g. yield) in the first penetration, and the maximum force is reached, indicating the "product firmness". If a composition is in the form of a paste or a very elastic gel, the product firmness (maximum force) is commonly observed at the maximum distance (depth) of penetration. The area under the force *versus* distance curve of the first penetration defines the area in the graph A1 of Figure 1. The plunger is forced into the composition for a second time, and again the force is plotted against the distance (or time). This part of the graph defines area A2. A typical force *versus* distance curve resulting from this penetration test on a semi-solid gel according to the invention has been indicated in Figure 2a and compared to test curves representing purees or pastes (e.g. vegetable purees and pastes) (Figure 2b) and elastic gels which are known in the prior art (e.g. xanthan-locust bean gum gel compositions) (Figure 2c).

For this invention, the following set up is used to characterise the gel texture:

### Test type: Penetration test with 2 cycle:

a. The measurements are performed after at least 12h maturation time after the samples are prepared and gelled (solidified). A longer maturation time of for example 24h to 48h is preferred.
b. The samples are equilibrated to room temperature for at least 2h, prior to measurement.
c. The machine and sample container specifications are as follows:
   - Container (125 ml propylene cup), 52 milimeters diameter
   - Sample height: at least 25 millimeters
   - Equipment: Texture Analyser Stable Microsystems (or similar)
   - Probe: 1/2 inch cylinder, smooth edges (P/0.5 - 0.5 inch diameter cylinder probe, Delrin)
   - Test set up (adapted from application notes REF: GL3/P05R, stable micro systems, Revised: March 2006). The following settings are used:
      - Load cell: 30kg
      - Compression mode, 2 cycles
      - Pre-test speed =10 millimeters/second
      - Test speed =5 millimeters/second
      - Post-test speed=10 millimeters/second
      - Trigger force = 3g
      - Penetration depth=10 millimeters (measurement error can be typically of 0.1-0.2 mm).
d. Values of parameters below are presented as average and with a standard deviation of at least duplicates.

The following relevant parameters are used to characterise the gels according to this invention and are measured using a penetration test with 2 cycles with a texture analyser according to the method as described above:
Firmness: The gelled food concentate of the invention is not liquid, but has a semi-solid texture with certain firmness. The firmness is determined as the maximum force (or breaking point) in the penetration first cycle (expressed in g). For a semi-solid gel as in this invention, the maximum force (firmness) is typically observed as a breaking point before complete penetration depth (distance is less than the penetration dept, which is 10mm). In the concentrate of the present invention, the firmness (in g) is preferably higher 20 g, more preferably higher than 25 g, even more preferably higher than 30 g, most preferably higher than 35 g. The firmness is preferably less than 1000 g, more preferably less than 700 g, even more preferably less than 500 g, even more preferably less than 200 g, most preferably less than 100 g.
Brittleness: Gels of the invention are preferably brittle gels. It is preferred that the gels have a certain brittleness so they are easier to spoon and easy to disperse in the application. Brittleness is defined, for the purpose of this invention, as the distance of penetration until the maximum force is achieved (in millimeters) in the first penetration. For a semi-solid gel as in the present invention (i.e. brittle gels), that is typically observed at a breaking point, at a distance (in millimeters) less than the penetration depth defined (10 mm). This is illustrated in Figure 2a. Contrary to a semi-solid gel, a paste may be too sticky and is not brittle, it does not break. This is illustrated in Figure 2b. An elastic gel might also not break within the penetration depth imposed in the test (10mm). This is illustrated in Figure 2c. The gel of the invention is preferably not an elastic gel.
   In the concentrate of the present invention the brittleness is preferably less than 9 millimeters, more preferably less than 8 millimeters, even more preferably less than 7 millimeters.
Recovery: The recovery of the composition is expressed as the ratio A2/A1: The ratio between A2/A1 is considered as a measure for the cohesiveness of the composition, i.e. is a measure of how well the product withstands a second deformation relative to how it behaved under the first deformation. The recovery is preferably less than 80%, more preferably less than 70%, even more preferably less than 60%. In general, semi-solid (brittle) gels as in this invention show a lower recovery value than very elastic gels, liquids, purees and pastes, as they break in the first cycle (i.e. breaking point or yield is observed in the first cycle at a distance below 10 mm).

### Salt-sensitive gums

It was found that a gelled food concentrate which provides a viscous ready to eat end product upon dilution, and which is not too hard and which allows for a relatively uncomplicated production method could be provided by using e.g. a combination of gelling pectin, such as described below, and salt-sensitive gum.

It was surprisingly observed that when the amount of salt-stable gelling systems, such as starch or gum was increased, or when salt-stable gum, for example xanthan gum, was used in an amount to provide the desired viscosity upon dilution (for example a viscous sauce or gravy), the gelled food concentrate could not be prepared without problems in commonly used stirring devices. During preparation of the gelled food concentrate the viscosity increases so drastically that the shear energy provided by stirring device shear equipment is not sufficient. Even if production would be possible, a gelled food concentrate would result with a harder texture, which easily shows complications when the product is removed from its packaging.

In the absence of salt, or below the critical concentration of salt, a salt sensitive gum shows texture enhancing behaviour in an aqueous solution. With texture enhancing behaviour is meant that when the salt sensitive gum is dissolved in an aqueous solution, it is able to form a gel or thicken the aqueous solution. For some gums a low concentration of counter ions, like Ca²⁺ might be necessary, as known to a person skilled in the art. At a salt concentration above a critical concentration, the salt-sensitive gum is not able to form a gel or to provide thickening, at least not to the extent observed in the absence of salt. This phenomenon may be described as "salting-out". In the salted-out state, the salt-sensitive gum may be present as a precipitate in the gelled food concentrate because of the relatively high salt content. This is for example observed when the salt-sensitive gum is alginate or gellan. The precipitated material may for example comprise dispersed particles. The dispersed particles may be crystals, deformable solid particles, amorphous structures and mixtures thereof. Salted-out material may in some cases act as a filler and as such show some reinforcement of the food concentrate, but does not contribute to the gel network (Van Vliet, 1988, Rheological properties of filled gels. Influence of filler matrix interaction, Colloid Polym Sci 266:518-524). The salt-sensitive gums are preferably homogenously dispersed but not dissolved in the gelled food concentrate of the present invention. The salted out material can be observed for example as particles with a particle size of from 30 to 400 micron. The structure in the form of a gel enables a stable homogenous dispersion of the salted-out gum in the food concentrate.

A salt sensitive gum in the salted out state, in general does not dissolve and stays precipitated as particles even if the gelled food concentrate is heated up to temperatures above the melting point of the salt stable gum (gelling pectin). This can be observed for example by heat stage light microscopy.

For the purpose of the present invention, "salted out" may be defined as the state of a gum in an aqueous composition wherein the concentration of salt is above the critical concentration.

As a consequence of the concentration of salt being above the critical concentration, the salt-sensitive gum may not be molecularly dissolved. Preferably, "salted-out" can be defined as that the salt-sensitive gum is in a not-molecularly dissolved state in the gelled food concentrate. Not-molecularly dissolved is a state known to the person skilled in the art. A molecular solution is a homogenous mixture of the dissolved solute and the solvent. In contrast, salted-out gums may form large aggregates or particles that coagulate and flocculate or sediment in a concentrated salt solution above the critical concentration (if no salt tolerant structuring material is present to keep them suspended). Salted out gums that are added as dry powders may not dissolve but stay particulates, sedimenting or flocculating when dispersed in water, i.e. when salt is above the critical concentration. When present in a solution with a salt-level below the critical concentration, the salted-out gums enter into solution.

"Salt-sensitive gum" should preferably be interpreted here as a gum which is able to provide texture enhancing behaviour in water of 20 °C, preferably at a pH of from 3.5 to 5.5, when present in an amount of 1 wt% (based on the weight of the water +salt sensitive gum), and, when needed, in the presence of a low concentration of appropriate counter ions, whereby the texture enhancing behaviour decreases or is lost above the critical concentration of salt.

The critical concentration of salt which results in the salting out of a salt-sensitive gum, depends on the type of salt in the gelled food concentrate. The salt responsible for the salting out of salt-sensitive gum is preferably selected from the group consisting of NaCl, KCI, CaCl₂, MgCl₂, and mixtures thereof. For the present invention, it might be preferred that the salt responsible for the salting out of salt-sensitive gum is preferably selected from the group consisting of NaCl, KCI, MgCl₂, and mixtures thereof. Alternatively other sources Sodium (Na), Magnesium (Mg) and Potassium (K) can be used (e.g. MgSO₄ instead of MgCl₂).
The salt critical concentrations for NaCl are higher than 8 wt%, preferably 9 wt%. The salt critical concentrations for CaCl₂ and MgCl₂ are higher then 1 wt%, more preferably higher than 3 wt%. The salt critical concentrations for KCI are higher then 3 wt%, more preferably higher than 5 wt%. These are critical concentrations, preferably at a temperature of 20 °C and at a pH of from 3.5 to 5.5, and are based on the weight of water + salt together.

The critical concentration of salt can be expressed as wt% of cations from the salting out salt (e.g. Na⁺⁾), based on the weight of the water + salt together. The critical concentrations of Na⁺ ions (preferably at 20 °C, at a pH of from 3.5 to 5.5) are preferably higher than 3.1 wt%, more preferably higher than 5.9 wt%. The critical concentrations of Ca²⁺ (preferably at 20 °C, pH 3.5-5.5) are preferably higher then 0.4 wt%, more preferably higher than 1.1 wt%. The critical concentrations of Mg²⁺ (preferably at 20 °C, pH 3.5-5.5) is preferably higher then 0.25 wt%, more preferably higher than 0.7 wt%. The critical concentrations of K⁺ (preferably at 20 °C, pH of from 3.5 to 5.5) are preferably higher then 1.6 wt%, more preferably higher than 2.6 wt%.

Preferably, the salt-sensitive gum is selected from the group of gums consisting of alginate, gellan, iota-carrageenan, kappa-carrageenan, lambda-carrageenan, and mixtures thereof. More preferably, the salt-sensitive gum is selected from the group of gums consisting of alginate, gellan, iota-carrageenan, kappa-carrageenan and mixtures thereof. Even more preferably, the salt-sensitive gum is selected from the group consisting of alginate, gellan, iota carrageenan and mixtures thereof. Even more preferably, the salt-sensitive gum is selected from the group of gums consisting of alginate, gellan and mixtures thereof. Most preferably, the salt sensitive gum is gellan. Gellan showed optimal capacity to provide a viscous ready to eat end product like a soup, a sauce or a gravy. Gellan gum may be in its original form (high acyl gellan) or may be in a deacetylated form (for example low acyl gellan). Preferably, the gellan is high-acyl gellan. High acyl gellan may be preferred for hot applications, such as for example soups, sauces or gravies. Low acyl gellan may be preferred for applications which are preferably consumed at a temperature of between 10 °C and 60 °C, such as for example cold soups or sauces. Alginate can preferably be high guluronate, high mannuronate alginate or propylene glycol alginate. High mannuronate alginate may be preferred for hot applications, such as for example soups, sauces or gravies.
It can be preferred that the salt-sensitive gum comprises alginate and gellan. Upon dilution of the gelled food concentrate the combination of these gums resulted in a texture of the ready-to eat end product which optimally resembled the texture of a home-made sauce or gravy.

Preferably, the invention relates to a gelled food concentrate wherein the salt-sensitive gum or mixtures thereof are present in an amount higher than 0.1 wt%, more preferably higher than 0.2 wt%, even more preferably higher than 0.25 wt%, preferably higher than 0.3 wt%, more preferably higher than 0.4 wt%, more preferably higher than 0.5 wt%, more preferably higher than 1 wt%, most preferably higher than 2 wt%, based on the weight of the gelled food concentrate. Preferably the amount is lower than 35 wt%, more preferably lower than 20 wt%, even more preferably lower than 15 wt%, more preferably lower than 10 wt%, more preferably lower than 9 wt%, most preferably lower than 8 wt% based on the weight of the gelled food concentrate. The amount of salt-sensitive gums can be adjusted depending on the chosen dilution rate of the gelled food concentrate and the degree of viscosity that is desired after dilution of the gelled food concentrate.

Preferably the salt-sensitive gum comprises alginate, preferably high mannuronate alginate. Alginate is preferably present in the amounts as given above. Especially when alginate is used, it is preferred that the amount of calcium salt is low. For example, preferably the amount of calcium ions is less than 0.8 wt% based on the weight of the water content, more preferably, no added calcium salt is present in the gelled food concentrate. Especially when alginate is used it may be preferred that the pH of the concentrate is lower than 3.5, more preferably less than 3, preferably between 2.5 and 2.8.

Preferably the salt-sensitive gum comprises gellan, preferably high acyl gellan. In addition to the amounts given above gellan may be present in an amount of lower than 4 wt%, more preferably lower than 2.5 wt%, more preferably lower than 2 wt%, based on the weight of the total gelled food concentrate.

It may be preferred in other cases, that the salt-sensitive gum is one of the group of gums consisting of iota-carrageenan, kappa-carrageenan, lambda-carrageenan and mixtures thereof. For some applications, iota-carrageenan may be preferred. These salt-sensitive gums may be preferred in case a more viscous or even semi-solid ready-to-eat end product is desired after dilution.

After dilution of the gelled food concentrate in an aqueous liquid, a ready-to-eat end product is provided. A ready-to-eat end product is ready to be consumed, without a further dilution step. The total amount of salt-sensitive gum in the ready-to-eat end product is preferably of from 0.01 to 3.5 wt%, more preferably of from 0.04 to 3 wt%, more preferably of from 0.1 to 2.0 wt%, even more preferably of from 0.2 to 1.5 wt%, most preferably of from 0.3 to 1.3 wt%,

### Salt

As described, the gelled food concentrate of the present invention comprises a salt-sensitive gum. To allow the salt-sensitive gum to be present in the non-dissolved, salted-out state, a relatively high amount of salt is present in the gelled food concentrate. Preferably the salt is selected from the group consisting of edible salts, such as sodium salt (preferably NaCl), magnesium salt (preferably MgCl₂), potassium salt (preferably KCI) and mixtures thereof. When "salt" is mentioned in this description, this does not include calcium salt. Calcium salt is described separately. Salt is preferably present in a total amount of from 5 wt% to 40 wt%, more preferably of from 7 wt% to 35 wt%, even more preferably of from 10 wt% to 35 wt%, even more preferably of from 15 wt% to 30 wt%, most preferably of from 20 to 26 wt%, based on the total water content of the concentrate food composition. The food concentrate according to the invention preferably comprises sodium salt (preferably NaCl) and optionally potassium salt (preferably KCI) and optionally magnesium salt, preferably sodium salt (preferably NaCl) and optionally potassium salt (preferably KCI) in a total amount of from 5 wt% to 40 wt% , more preferably of from 7 wt% to 35 wt%, even more preferably of from 10 wt% to 35 wt%, even more preferably of from 15 wt% to 30 wt%, most preferably of from 20 to 26 wt%, based on the total water content of the concentrate food composition. The amount of salt is calculated as standard in the art, and is according to the following formula: ((weight of salt) / (weight of salt + weight of total water content)) *100. For example 5 g salt in 20 g total water content results in an amount of salt of 20 wt% on total water content. When preparing the concentrate food composition of the invention, this amount of salt can be added during preparation. The same formula is used, *mutatis mutandis* for calculating other ingredients the amount of which is described as based on the total water content, such as for example Ca²⁺ cations, and gelling pectin.

Sodium salt, preferably NaCl, is preferably present in an amount of from 5 wt% to 40 wt%, preferably of from 7 wt% to 35 wt%, even more preferably of from 10 to 35 wt%, even more preferably of from 15 to 30 wt%, most preferably of from 20 to 26 wt%, based on the total water content of the concentrate food composition.

Preferably at least 50 wt%, more preferably at least 80wt% of the salt comprises NaCl, even more preferably the salt comprises more than 90 wt% of NaCl. Salt is preferably sodium salt. Preferably, the gelled food concentrate comprises NaCl in an amount of from 8 wt% to 25 wt%, based on the weight of the gelled food concentrate. More preferably, NaCl is present in an amount of from 9 wt% to 20 wt%, even more preferably in an amount of from 9 wt% to 18 wt%, based on the weight of the gelled food concentrate.

It might be preferred that in addition to sodium salt, preferably NaCl, the food concentrate comprises a potassium salt (preferably KCI). The presence of potassium ions in combination with sodium ions, preferably at specific ratios in the concentrate result in firmer gels compared to the situation when only Na⁺ cations or K⁺ cations are present. Optimum results were obtained when gellan was used as the salt sensitive gum in combination with the gelling pectin and the combination of sodium salt and potassium salt. In this situation gels were obtained that were much stronger, or wherein the amount of gelling pectin could be reduced. In addition the gels were more easily formed.

To this end, especially when potassium salt is present in the concentrate, NaCl is preferably present in an amount of from 4 to 35 wt%, more preferably of from 3.5 to 30 wt%, even more preferably of from 5 to 25 wt%, most preferably of from 7 to 23wt%, based on the total water content. This is even the more surprising, since general knowledge suggests a reduction in gel strength at extreme salt levels (higher than 5 %wt based on the total water content), for both Na⁺ and K⁺ cations.

The ratio of Na⁺ cations to the total amount of Na⁺ cations and K⁺ cations taken together, i.e. the ratio [Na⁺cations/(Na⁺ cations + K⁺ cations)], or for simplicity, [Na⁺/(Na⁺+K⁺)]*100 (expressed in %) in the concentrate food composition according the invention is preferably of from 15 wt% to 95 wt%, more preferably from 35 wt% to 93 wt%, more preferably of from 40 wt% to 92 wt %, even more preferably of from 45 wt% to 90 wt %, most preferably from 50 wt% to 85 wt%. These ratios resulted in most significant effects on gel formation and advantages indicated above.

The food concentrate preferably comprises potassium salt. Most preferably, the potassium salt comprises KCI. The potassium salt, preferably KCl is preferably present in an amount of from 0.6 to 20 wt%, more preferably of from 0.8 wt% to 19 wt%, even more preferably of from 1 wt% to 17 wt%, most preferably of from 1.5 wt% to 15 wt%, based on the total water content of the concentrate.

These amounts are preferably present to result in a ratio of [(Na⁺/(Na⁺+K⁺))*100] of from 15 wt% to 95 wt% in the final food concentrate composition. Therefore the invention preferably relates to a food concentrate wherein potassium salt, preferably KCI, is present in an amount of from 0.6 to 20 wt%, based on the total water content of the concentrate, and calculated as (weight of salt / (weight of salt + weight of total water content))*100%, and Na⁺ ions and K⁺ ions are present in a ratio of [(Na⁺/(Na⁺+K⁺))*100] of from 15 wt% to 95 wt%.

Na⁺cations are preferably present in an amount of from 1.5 wt% to 15 wt%, more preferably in an amount of from 1.7 wt% to 12 wt%, even more preferably in an amount of from 2 wt% to 11 wt%, most preferably from 2.5 wt% to 10 wt% based on the total water content of the food concentrate composition.

K⁺cations are preferably present in an amount of from 0.3 wt% to 13 wt%, more preferably in an amount of from 0.4 wt% to 10 wt%, even more preferably in an amount of from 0.5 wt% to 9 wt%, most preferably from 0.8 wt% to 8 wt% based on the total water content of the food concentrate composition.

The salt might comprise MgCl₂ in an amount of from 0.3 wt% to 25 wt%, more preferably of from 1 wt% to 10 wt%, more preferably from 1.5 wt% to 5 wt%, based on the water content. The amount may be for example of from 0.3 to 2 wt%, based on the weight of the gelled food concentrate.

When the salt-sensitive gum comprises carrageenan, it may be preferred that the salt comprises MgCl₂, preferably in addition to sodium salt, preferably NaCl. In a concentrate of the invention, kappa carrageenan is preferably combined with KCI, MgCl₂ or mixtures thereof, preferably in combination with sodium salt, preferably NaCl. lota-carrageenan is preferably combined with CaCl₂, MgCl₂ or mixtures thereof, preferably in combination with sodium salt, preferably NaCl. Alginate might be preferably combined with MgCl₂ or mixtures thereof, preferably in combination with sodium salt, preferably NaCl. Preferably alginate is used in combination with NaCl. Gellan is preferably combined with KCI, preferably in combination with sodium salt, preferably NaCl.

The salt is preferably present in a dissolved form. When the salt is not dissolved, which may occur for example when the gelled food concentrate is over-saturated for salt or (locally) dried out, this may give a negative, for example a non-fresh, appearance for the consumer.

### Calcium salt

The food concentrate of the present invention might further comprises calcium salt. This provides calcium cations (Ca²⁺). Preferably the food concentrate according to the invention comprises Ca²⁺ in an amount of from 0.01 wt% to 3 wt% Ca²⁺, more preferably from 0.02 wt% to 2 wt% Ca²⁺, even more preferably from 0.03 wt% to 1.5 wt% Ca²⁺, most preferably from 0.04 wt% to 1 wt% Ca²⁺ based on the total water content of the concentrate. The calcium salt is preferably present in an amount to provide these preferred amounts of Ca²⁺ cations in the concentrate of the invention.

Preferably the food concentrate according to the invention comprises Ca²⁺ in an amount of from 10 to 2000 mg Ca²⁺/g of gelling pectin, more preferably from 15 to 1000 mg Ca²⁺/g of gelling pectin, even more preferably from 20 to 800 mg Ca²⁺/g of gelling pectin, most preferably preferably from between 30 to 400 mg Ca²⁺/g of gelling pectin (as defined below) and dissolved in the water of the food concentrate. It might be preferred that the invention comprises Ca²⁺ in an amount of from 100-300 mg Ca²⁺/g of gelling pectin (as defined below) and dissolved in the water of the food concentrate.

Calcium salt, and preferably calcium ions at these levels, are preferably present in a gelled food concentrate wherein the pH is higher than 3.5, preferably higher than 4 and preferably lower than 7.0, more preferably lower than 6.0, most preferably lower than 5.5. It could be preferred that the gelled food concentrate has a pH of lower than 3.5, which might be preferred in the case when alginate is present as salt sensitive gum.. Preferably, the pH is lower than 3, more preferably lower than 2.8. The pH is preferably higher than 1, more preferably higher than 1.5, even more preferably higher than 2. The pH can be preferably between 1 and 3.5, more preferably between 1.5 and 3.2, even more preferably between 2 and 3. Surprisingly, this pH range resulted in a gel which showed a very quick dispersion behaviour, for example in hot water of e.g.95 °C. The gelled food concentrate could be dispersed within a minute or even within seconds. At a pH of lower than 3.5, the amount of calcium ions is preferably low, for example less then 0.8 wt%, based on the weight of the water content and it can be preferred not to add calcium salt.

The pH of the gelled composition is the pH as measured after a period of 1 day after preparation of the concentrate gelled food composition at room temperature (e.g. 20 °C), to allow maturation and stabilisation of the pH of the gel. It is known to the skilled person how to measure the pH of a food composition in the form of a gel.

### Water

The gelled food concentrate of the invention comprises water. Preferably the amount of water is from 20 wt% to 90 wt% (based on the weight of the total gelled food concentrate). More preferably, the amount of water is from 30 wt% to 80 wt%, even more preferably from 40 wt% to 70 wt%, most preferably from 45wt% to 60wt%. Preferably, the water activity of the total gelled food concentrate is between 0.7 and 0.95, preferably of from 0.73 to 0.85.

### Other ingredients

The gelled food concentrate of the invention preferably is a concentrate to prepare a ready to eat end product preferably a savoury food product like a soup, sauce or gravy. The savoury food product is preferably a viscous soup, a viscous sauce or a viscous gravy. It preferably contains ingredients that contribute to the savoury character of these types of food product.
In the concentrates according to the invention, it is preferred that taste-imparting components are present. They may comprise one or more of yeast extract; hydrolyzed proteins of vegetables-, soy-, fish-, or meat-origin, liquid or dissolvable extracts or concentrates selected from the group consisting of meat, fish, crustaceans, herbs, fruit, vegetable and mixtures thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, chicken (and other fowl). Preferably the plant pieces comprise pieces selected from the group consisting of onion, garlic, leek, carrot, parsley, tomato and mixtures thereof. Preferably the amount of taste-imparting components as set out above is from 1 wt% to 70 wt% (by weight on the total concentrate). More preferred from 2 wt% to 60 wt%, even more preferably from 5wt% to 40%. In the ready-to-eat end product, resulting after dilution of the gelled food concentrate, the amount of taste imparting ingredient is preferably of from 0.1 wt% to 5 wt%, more preferably of from 0.5 wt% to 4 wt%, most preferably of from 1 wt% to 3.5 wt%, based on the weight of the ready-to-eat end product.

It can be preferred that the ready-to-eat end product is free from particles. "Particles" in the context of "other ingredients", does not refer to salt-sensitive gum particles. A particle should be construed here as a particle that is visible with the naked eye in the ready-to-eat end product, i.e. after dilution of the gelled food concentrate in an aqueous liquid, such as water. For some applications, for example for a concentrate for a viscous soup, it might be preferred that some particles are present. Preferably, the amount of particles, preferably particles selected from the group of particles of meat, particles of fish, particles of crustaceans, particles of plant (e.g. herbs, vegetable, fruit), particle of fungi (e.g. mushroom) and mixtures thereof is from 0.5 wt% to 70 wt%, more preferably from 1 wt% to 60 wt%, even more preferably from 2 wt% to 40 wt% (by weight on the total concentrate). The amount of particles can be of from 0.5 to 30 wt%, more preferably of from 1 to 20 wt%, even more preferably of from 2 to 10 wt% (wet weight based on the weight of the food composition). In particular when the gelled concentrate is a concentrate for a viscous soup, particles may be present in an amount of from 0.5 wt% to 10 w%, more preferably of from 1 wt% to 8 wt%, even more preferably of from 2 wt% to 5 wt%, based on the weight of the gelled food concentrate.

### Savoury taste enhancer

To contribute to the savoury character, the concentrate food composition of the present invention may further comprise a savoury taste enhancer selected from the group consisting of monosodium glutamate (MSG), 5'-ribonucleotides, organic acid and mixtures thereof. Savoury taste enhancer is preferably present in a total amount of less than 30 wt%, more preferably of between 0.1 wt% and 30 wt%, preferably in an amount of from 1 wt% to 25 wt%, most preferably in an amount of from 5wt% to15 wt%, based on the weight of the total food concentrate. An individual taste enhancer as mentioned above may be present in an amount of less than 30 wt%, more preferably of between 0.1 wt% and 30 wt%, preferably in an amount of from 0.5 wt% to 25 wt%, most preferably in an amount of from 1 wt% to15 wt%, based on the weight of the total food concentrate.
The amount of monosodium glutamate may for example be of from 1 wt% to 40 wt%, from 5 wt% to 20 wt%, from 5 wt% to 10 wt% or from 1 wt% to 10 wt% by weight of the gelled food concentrate.

It might be preferred that the gelled food concentrate of the present invention comprises a relatively low amount of non-gelatinised starch. Higher amounts of starch result in complications like high viscosity during production of the gelled food concentrate, less formulation flexibility, an opaque appearance of the product and/or a starchy taste in the ready-to-eat end product. Therefore, preferably, the gelled food concentrate comprises less than 30 wt% of non-gelatinised starch, preferably less than 25 wt%, more preferably less than 20 wt%, even more preferably less than 15 wt%, even more preferably less than 10 wt%, even more preferably less than 5 wt%, even more preferably substantially free of non-gelatinised starch, most preferably, 0% of non-gelatinised starch, based on the weight of the gelled food concentrate. The amount may be for example of from 5 wt% to 30 wt%, preferably of from 10 wt% to 30% or can be of from 10 to 25 wt%, based on the weight of the gelled food concentrate.

### Fat

The gelled food concentrate of the present invention may contain fat and is preferably a water-continuous composition. The term "fat" is defined for the present purpose as any edible triglyceride or mixtures of triglycerides. The term is meant to include triglycerides which are liquid (oil) at 20 degrees C. The amount of fat is preferably relatively low. Fat might negatively affect the structure of the gelled food concentrate. Preferably, the amount of fat is lower than 15 wt%, more preferably lower than 10 wt%, even more preferably lower than 5 wt%. Some fat might however be desired for some applications. It might be preferred that the amount of fat is from 0 wt% to 15 wt%, or from 0.5 wt% to 10 wt%, or from 1 to 10 or from 3 wt% to 10 wt%, based on the weight of the total gelled food concentrate.

An advantage of the present invention is that gelled food concentrates can be provided according to the present invention which allow pasteurisation or sterilisation, without dramatically reducing the thickening capacity in the ready-to-eat end product. The gelled food concentrate may however comprise some preservatives. It is in the skill of an artisan to choose a suitable preservative. However the gelled food concentrate is preferably free from alcohol, such as for example ethanol, as this not preferred from a consumer perspective in a savoury food composition.

### Sugar

The food concentrate of the invention is a savoury food concentrate. Consequently, after dilution, the resulting product does preferably taste not sweet. The sugar content in the composition according to the invention is preferably lower than 50 wt%, more preferably lower than 40 wt%, even more preferably lower than 30 wt%, more preferably lower than 15wt%, most preferably lower and 10 wt%. It can be more than 1%, preferably more than 5 wt% based on the total weight of the concentrate. A suitable range could be of between 1 and 20 wt%, preferably of from 3 to 15 wt% based on the total weight of the concentrate. It may be preferred that the composition is free from sugar or free from any added sugar. Sugar polyols could also provide a sweet taste to the product resulting after dilution. The consumer may not appreciate the presence of these compounds. The concentration of sugar polyols, for example sorbitol or liquid sugar polyols, is preferably less than 3 wt%, preferably less than 1 wt%, more preferably less than 0.5 wt%, even more preferably less than 0.1 wt%, or less than 0.05 wt% based on the weight of the food concentrate. Most preferably the composition does not contain any added sugar polyol or added liquid sugar polyol.

### Gelling pectin

The gelled food concentrate of the present invention comprises a salt-stable gelling system. The salt-stable gelling system comprises gelling pectin. A salt-stable gelling system is a gelling system which is able to form a shape stable gel in water at a salt content of higher than the amount critical to keep the salt-sensitive gum in the gelled food concentrate in the salted-out state. The amount of salt-stable gelling system depends on the desired texture, e.g. the hardness of the gelled food concentrate.

### Gelling pectin

According to the invention, the food concentrate comprises gelling pectin. Pectin is a substance which is present in the cell wall of plants. Pectin is used as a thickening and gelling agent, and is known in the food industry to provide structure in fruit and vegetable compositions.

Pectic substances are complex heteropolymers originating from plant tissue. Pectin consist predominantly of α-D galacturonic acid units, but also contains some amount of neutral sugars such as rhamnose, xylose, arabinose, galactose and gulose. For the purpose of this invention "pectin" is expressed as "galacturonic acid", and accordingly, we define the "pectin content" in a food formulation as the weight percentage of galacturonic acid (GalA) based on the total water content of the concentrate. The pectin content can be determined by methods known in the art, such as for example the Saeman hydrolysis method (Englyst and Cummings (Analyst, 109(7), 937-942 (1984), Filisetti-Cozzi and Carpita (Analytical Biochemistry, 197,157-162 (1991)).

The carboxyl groups at the sixth carbon of each galacturonic acid unit may be esterified by a methyl group or may exist as unesterified free carboxyl group. The percentage of esterified galacturonic acid units relative to the total number of galacturonic acid units in a pectin polymer is called the degree of esterification (DE). The degree of esterification can be determined according to methods known in the art, such as the base titration method (Shultz, 1965) as proposed by the Food Chemical Codex (FCC (1981). 3rd ed., (1981) National Academy of Science, Washington, DC), quantification of methanol released during de-esterfication using gas chromatography (GC) (Walter et al. (1983), Journal of Food Science, 48: 1006-10070), colorimetry (Hou et al. (1999), Botanical Bulletin of Academia Sincia, 40:115-119), high performance liquid chromatography (HPLC) (Levigne S., et al. (2002), Food Hydrocolloids 16: 547-550), nuclear magnetic resonance (NMR) (Rosenbohm et al. (2003) Carbohydrate Research, 338: 637-649) and capillary zone electrophoresis (CZE) (Williams et al. (2003), Journal of Agricultural Food and Chemistry, 51: 1777-1781).

The DE resulting from such a determination is usually expressed as an average degree of esterification to account for the differences in DE of the individual polymers in a formulation. The average degree of esterification (DE) is often used to classify pectin according to physical characteristics like the ability to form gels in the presence of divalent cations like calcium. In this context the term "Low methoxyl pectin" is often used for pectins with a low degree of esterification that can be induced to form gels in the presence of calcium, while the term "High methoxyl pectin" describes pectins that don't gel in the presence of calcium due to their high content of methoxyl ester groups.

Compositions of the current invention may contain plant material such as for example fruit or vegetable pieces and purees, which are a source of pectin present in the formulation. This pectin may have a variety of different average DE, potentially leading to a broad and heterogeneous DE distribution which makes the use of an average DE to characterise the pectin in the invention unpractical. It was found, that in the context of the present invention, i.e. in high-salt food concentrates, it is the pectin with a DE of lower than 55 % that contributes to the desired texture of a semi-solid gel. Therefore, for the purpose of this invention we define as "gelling pectin" all pectin with a DE below 55%. Preferably the DE is of below 50% even more preferably below 45%, most preferably the DE is below 40%. A method to separate pectin into fractions with different DE is described, for example, by Strom, et al. (2005), Carbohydrate Polymers, Volume 60, Issue 4, 20 June 2005, Pages 467-473.

Gelling pectin is present in an effective amount, i.e. to provide a food concentrate in the form of a semi-solid gel. As conceivable for the skilled person, to provide the texture according to the invention, the gelling pectin is dissolved gelling pectin, i.e. dissolved in the water of the food concentrate of the invention. Preferably, the amount of gelling pectin, dissolved in the water of the food concentrate composition, is of between 0.7 wt% and 10 wt%, more preferably of between 0.9 wt% and 6 wt%, even more preferably between 1.0 wt% and 5 wt%, even more preferably between 1.1 wt% and 4 wt%, most preferably between 1.2 wt% and 3 wt%, based on the total water content. This amount is to be calculated as common in the art, according to the following formula ((weight of galacturonic acid)/(weight of galacturonic acid + weight of total water content))*100%. As indicated, the DE of the gelling pectin is lower than 55%. Preferably, the DE of the gelling pectin is lower than 50%, preferably of lower than 45%, more preferably of lower than 40%, most preferably the DE is lower than 30%.

It was found that relatively high salt levels are preferably combined with relatively high pectin levels, for optimal stability during storage and transport. For a sodium salt content of higher than 20 wt% on total water content, the amount of gelling pectin, with a DE below 55% as defined above, is preferably of between 1.3 wt% and 10 wt%, more preferably of between 1.4 wt% and 5 wt%, even more preferably between 1.5 wt% and 4 wt%, most preferably between 1.5 wt% and 3.5 wt%, expressed as galacturonic acid content based on the total water content of the food concentrate.

For a sodium salt content of higher than 10 wt% on total water content, the amount of gelling pectin, with a DE below 55% as defined above, is preferably of between 0.8 wt% and 10 wt%, more preferably of between 0.9 wt% and 5 wt%, even more preferably between 1.0 wt% and 4 wt%, most preferably between 1.2 wt% and 3 wt%, expressed as galacturonic acid content based on the total water content of the food concentrate.

It could be preferred in the present invention that the gelling pectin is non-amidated pectin. Amidated low methoxyl pectins differ from non-amidated low methoxyl pectins by the presence of a number of amide groups in the pectin molecule, partially substituting methyl ester groups. Legislation limits the degree of amidation to 25%. It is preferred that the amidation level in the gelling pectin is lower than 20%, preferably below 10%. Most preferably, the gelling pectin is non-amidated pectin. It was observed that non-amidated pectin gave better results than amidated pectin in some cases. Non-amidated pectin provides the additional advantage that the price is lower. It has a more natural appearance for the consumer.

### Weight

The weight of the gelled food concentrate according to the present invention is preferably more than 2 g, preferably more than 10 g, even more preferably more than 15 g, most preferably higher than 20 g and preferably less than 10 kg, more preferably less than 1 kg, even more preferably less than 500 g, even more preferably less than 300 g, even more preferably less than 100 g, most preferably less than 50g.

Gelled food concentrates with a size of from 2 g to 300 g, preferably of from 10 g to 100 g, most preferably of from 15 g to 50 g are in particular suitable for, but not limited to, unit dosing and are preferably designed for single use (e.g. for dilution in 250 ml). The relatively small formats showed optimal dilution behavior.

The gelled food concentrates can also be a multi-dosing format, although the format is not limited to this. In this case the consumer can dilute only part of the gelled food concentrate of the invention in an appropriate amount of liquid, by for example using a spoon or other suitable utensil. In case of a multi-dose format, the weight of the concentrate can preferably be from 80 g to 1 kg, more preferably from 100 g to 850 g.

### Process

In a further aspect, the present invention relates to process to prepare a gelled food concentrate according to the invention.

In step a) of the process of the invention preferably a mixture is provided comprising at least part, preferably all of the water and the gelling pectin.

In step b) of the process of the invention, the gelling pectin in the mixture of step a) is heated. Heating provides activation of the pectin. Preferably the mixture is heated to a temperature above the activation temperature of the gelling pectin. Preferably the heating step is carried out at a temperature of from 50°C to 100 °C, more preferably of from 55 °C to 95°C, most preferably of from 60°C to 90°C.
Optionally, other remaining ingredients (for example fat, taste enhancers, salt, calcium salt) may be added to the mixture after activation, before packaging.

In step c), salt (or salt mixture) is added. Step c) is preferably carried out after heating step b).

In step d) salt sensitive gum is added to the mixture, Step d) is preferably carried out after step c).

In step e), the mixture is solidified. Solidifying includes allowing to solidify. During solidification of the salt-stable gelling system, it forms a structuring network. Solidifying step e) preferably comprises addition of calcium salt. By addition of calcium salt the ingredient mixture can be initiated to solidify. Calcium salt is preferably added to the mixture after step b), more preferably after or during step d). Step e) may further comprise addition of calcium-rich ingredients (e.g. dairy powders or vegetable powders). Calcium salt is preferably added in an amount to provide of from 0.01 wt% to 3 wt% Ca²⁺, more preferably from 0.02 wt% to 2 wt% Ca²⁺, even more preferably from 0.03 wt% to 1.5 wt% Ca²⁺, most preferably from 0.04 wt% to 1 wt% Ca²⁺ in the final resulting gelled food concentrate, based on the total water content of the resulting concentrate. It might be preferred that calcium salt is added to provide an amount of Ca²⁺ in the resulting gelled food concentrate of from 10 to 2000 mg Ca²⁺/g of gelling pectin, more preferably from 15 to 1000 mg Ca²⁺/g of gelling pectin, even more preferably from 20 to 800 mg Ca²⁺/g of gelling pectin, most preferably preferably from between 30 to 400 mg Ca²⁺/g of gelling pectin. Calcium salt is added to provide an amount of Ca²⁺ in the resulting gelled food concentrate in an amount of from 100-300 mg Ca²⁺/g of gelling pectin.

It might be preferred, for example, when alginate is used, that solidifying step e) comprises reduction of the pH of the mixture to a pH of below 3.5. The pH can be adjusted as known in the art, for example by adding acid. Adjusting the pH preferably comprises adding acid, preferably an acid selected from the group consisting of for example HCl, phosphoric acid, citric acid, sulphuric acid, ortophosphoric acid, and mixtures thereof. Solidifying step e) can preferably comprise adjusting the pH during or after step a) and preferably before packaging step f).

Therefore, solidifying step e) preferably comprises addition of calcium salt or reduction of the pH of the mixture to a pH of below 3.5. Solidifying is normally enhanced by cooling. Therefore, preferably the solidifying step e) further comprises cooling, preferably to room temperature or lower.

In step f) the mixture is packaged. Packaging step f) is preferably carried out after solidifying step e) has started, i.e. after addition of calcium salt or after adjusting of the pH to a pH of below 3.5. Solidifying step e) normally is not finished before the packaging step f), and the mixture is transferred to the packaging in pourable form. Solidifying normally continues after packaging, till the mixture is a completely solidified gel.
Alternatively, packaging step f) can be carried out after addition of the salt-sensitive gum (step d) and before solidifying step e). In that case, calcium salt is added to the mixture in a packaging or the pH is adjusted when the mixture is in the packaging. When packaging step f) is carried out after finishing solidifying step e), the gelled food concentrate is packaged in a solidified state, which might be preferred in some cases.

The product of the invention can also be produced by adding a salted-out gum to a mixture comprising water, salt and salt stable gelling agent. Therefore, the invention further relates to a process wherein the salt-sensitive gum is added to the mixture of step a) in a salted-out state.
The salt-sensitive gum in salted-out state may be prepared by providing a pre-mixture comprising water, salt-sensitive gum and salt in a concentration to bring the salt-sensitive gum in the salted-out state. The salted out gum is preferably precipitated. Preferably, the salt is NaCl, preferably present in an amount of higher than 8 wt% based on the weight of the pre-mixture. When precipitated, salt-sensitive gum in the salted-out state can be separated from the pre-mixture, for example by filtration or centrifugation. This could be advantageous, for example in case the salt-sensitive gum is alginate or gellan.

In a further aspect, the invention relates to a process to prepare a ready-to-eat end product, comprising the step of diluting at least part of a gelled food concentrate according to the invention in an aqueous liquid. The aqueous liquid is preferably water. Preferably, the temperature of the aqueous liquid is of between 5 °C and the boiling temperature of the aqueous liquid, preferably of from 20 °C to 100 °C, more preferably of from 40 °C to 100°C, even more preferably of from 55 °C to 100°C, most preferably of from 70°C to 100 °C.

### Viscosity of the ready-to-eat end product

Preferably, the gelled food concentrate, after dilution in an aqueous liquid, preferably water, results in a ready-to-eat end product having a viscosity of higher than 15 mPa.s, more preferably,higher than 20 mPa.s, even more preferably higher than 40 mPa.s, even more preferably higher than 50 mPa.s, most preferably higher than 60 mPa.s. The viscosity can preferably be lower than 10000 mPa.s, preferably lower than 5000 mPa.s, more preferably lower than 2000 mPa.s, more preferably lower than 1500 mPa.s, even more preferably lower than 1000 mPa.s, and most preferably lower than 300 mPa.s. In the case the concentrate is used for sauces or gravies, the viscosity can be preferably between 20 and 350 mPa.s, more preferably between 40 and 250 mPa.s, more preferably between 40 and 350 mPa.s, even more preferably between 50 and 200 mPa.s, and most preferably between 50 and 150 mPa.s. Preferably, the indicated viscosities are present at 20°C. More preferably, the indicated viscosities are present at 50°C, even more preferably, at 70°C. Most preferably the ready-to-eat end product shows the indicated preferred viscosity at 20 °C and also at 50 °C, preferably also at 70°C, more preferably at both 50 °C and 70 C.

### Protocol viscosity measurement:

- Samples are dispersed (e.g. 10x dilution) at a temperature of 99 °C, while stirring for 3-6 min, or until complete dispersion.
- The solutions are transferred into a rheometer (for example, MCR300 or MCR 301 Physica, Anton Paar) pre-heated at 90-85 °C and equipped with a profiled cylinder and bob.
- The shear rate is set to 30/s throughout the experiment.
- The temperature is kept at 75 °C for 2 minutes, the solution is cooled to 20 °C at 2 °C/min and kept for 2 minutes at 20 °C.
- Then the viscosities are read at, for example 70 °C and 50 °C are expressed in mPa.s.

### Dilution

Preferably, the invention relates to a process to prepare a ready-to-eat end product, comprising the steps of diluting at least part of a gelled food concentrate according to the invention in an aqueous liquid, like water, preferably hot water, at for example 99°C. In the process of mixing the gelled food concentrate with e.g. hot water, some components may dissolve rather than dilute. The term "dilution" as used in the present application is meant to cover both dilution, dispersion and dissolution. Preferably, the dilution factor of the gelled food concentrate to aqueous liquid is of between 4 to 100 times, more preferably of between 5 and 50 times, even more preferably of between 8 and 20 times based on the weight of the gelled food concentrate. For example, a dilution of 10 times should be interpreted as diluting 10 g gelled food concentrate in 90 g of water.
Preferably, the invention relates to a process to prepare a ready-to-eat end product, comprising the step of diluting at least part of a gelled food concentrate according to the invention in an aqueous liquid, preferably using a diluting rate of between 4 and 100 times.

Dilution is preferably relatively fast. Preferably a gelled food concentrate according to the present invention with a size of 25 g dilutes in 250 ml of water at 95°C, using stirring, e.g. by using wire whisk, in a time period of less than 4 minutes, more preferably less than 3 minutes, even more preferably less than 2 minutes. As the gelled food concentrate of the present invention is a concentrated product, it preferably allows dilution as described below.

After dilution of the gelled food concentrate of the present invention, the salt content of the ready-to-eat end product is preferably of from 0.2 to 2.5 wt%, more preferably of from 0.5 wt% to 1.7 wt%, even more preferably of from 0.7 wt% to 1.5 wt%, most preferably of from 0.8 to 1.4 wt%, based on the weight of the ready-to-eat end product. This complies with an amount of from 2 to 17 g/litre, 5 to 17 g/litre, 7 to 15 g/litre, 8 to 14 g/litre, respectively.
The invention further relates to the use of a gelled food concentrate of the present invention to provide a gravy, a soup, or a sauce, preferably to provide a gravy.

Different embodiments of the invention may be carried out in using preferred or more preferred conditions (e.g. pH) or ingredients (e.g. levels of salt-sensitive gum, salt). Preferred ranges will often be described in the following format: preferably at least x1, more preferably at least x2, even more preferably x3, preferably at most y1, more preferably at most y2, even more preferably at most y3, whereby x1 <x2<x3<y3<y2<y1. This format is meant to include the preferred ranges x1 to y1, more preferably x2 to y2 and even more preferably x3 to y3 whereby the endpoints are included and also all sub ranges subsumed therein (e.g. x1 to y3 and x3 to y1). The same applies when ranges are described in the format "higher/more than x1" or "lower/less than y1" except that the endpoints are not included.

Vice versa, when preferred ranges are described as x1 to y1, more preferably x2 to y2 and even more preferably x3 to y3, the endpoints are meant to be included and also all subranges subsumed therein (e.g. x1 to y3 and x3 to y1). In addition, all open ended ranges are meant to be included: preferably at least x1, more preferably at least x2, even more preferably x3, preferably at most y1, more preferably at most y2, even more preferably at most y3.

The term "comprising" whenever used in this document is intended to indicate the presence of stated features, integers, steps, components, but not to preclude the presence or addition of one or more other features, integers, steps, components or groups thereof.

Ingredients such a salt-sensitive gum, salt etc will be used in singular, although it should be noted that even when used in singular it is not meant to exclude a mixture of e.g. salt-sensitive gums and salts respectively.

The invention will now be illustrated by the following non-limiting examples.

### Examples

### Example 1:

### Process:

- Water and pectin powder were mixed in a Thermomix (Vorwerk, Germany)
- The mixture was heated to 90 ° C and kept at this temperature for 5 min
- Salt mixture (NaCl + KCI) and savoury mix were added
- The hot mixture was stirred until homogeneous, for 5 min
- Salt sensitive gum (Gellan) and calcium salt were added
- The hot mixture was stirred until homogeneous, for 5 min
- The hot mixture was filled into containers and cooled to solidify
- The Firmness and viscosity (after dilution) were measured according to the protocol as described in the description.

| | %wt |
|---|---|
| Added water (tap) | 58.5 |
| Salt mixture (∼70% NaCl, 30% KCl) | 14.0 |
| Savoury mix | 22.0 |
| Pectin powder (LC 810, Danisco) | 2.1 |
| Salt sensitive gum - gellan (High acyl, Kelcoqel LT 100, CP Kelco) | 3.0 |
| CaCl2.2H2O | 0.4 |
| Total | 100 |
| | |
| Firmness (in g) | 67 |
| Brittleness (in mm) | 5.2 |
| Viscosity after dilution (mPa.s) 18g in 250g water | at 70 °C =260 |
| | at 50 °C =250 |
| | at 20 °C =300 |

| | |
|---|---|
| *^{a)} LC 810 (Danisco average DE typically 37, contains gelling pectin), contains* ∼62% *galacturonic acid (GalA).* Savoury mix contains: sucrose, meat powder, yeast extract, onion powder, beef flavouring, paprika powder, herbs. Contains approximately 15% NaCl. | |

### Result

A semi solid shape stable food concentrate was obtained in the form of a gel. After dissolution in hot water and subsequent cooling down a viscous ready-to-eat savoury product (gravy) was obtained.

### Example 2:

### Process:

- Water and pectin powder were mixed in a Thermomix (Vorwerk, Germany)
- The mixture was heated to 90 ° C and kept at this temperature for 5 min
- Salt (NaCl) and savoury mix were added
- The hot mixture was stirred until homogeneous, for 5 min
- Salt sensitive gum (Gellan) and calcium salt were added
- The hot mixture was stirred until homogeneous, for 5 min
- The mixture was filled into containers and cooled to solidify
- The Firmness and viscosity (after dilution) were measured according to the protocol as described in the description.

| | % wt |
|---|---|
| Added water (tap) | 59.0 |
| NaCl | 14.5 |
| Savoury mix | 22.0 |
| Pectin powder (LC 810, Danisco) | 2.7 |
| Salt sensitive gum - gellan (High acyl, Kelcogel LT 100, CP Kelco) | 1.3 |
| CaCl2.2H2O | 0.5 |
| Total | 100.0 |
| | |
| Firmness (in g) | 47 |
| Viscosity after dilution (mPa.s) 18g in 250g water | at 50 °C =24 |
| | at 20 °C =30 |

| | |
|---|---|
| a) *LC 810 (Danisco average DE typically 37, contains gelling pectin), contains ∼62% galacturonic acid (GalA).* (b) Savoury mix contains sugar, yeast extract, meat powder base, parsley, pepper, flavours. Contains approximately 19% NaCl. | |

### Result

A semi-solid food concentrate in the form of a shape stable gel was obtained. After dilution in hot water and subsequent cooling down, a viscous sauce was obtained.

### Example 3:

### Process:

- Water and pectin powder were mixed in a Thermomix (Vorwerk, Germany)
- The mixture was heated to 90 ° C and kept at this temperature for 5 min
- Salt mixture (NaCl + KCI) was added
- The hot mixture was stirred until homogeneous, for 5 min
- Salt sensitive gum (Alginate) was added
- The hot mixture was stirred until homogeneous, for 5 min
- The pH was reduced by addition of HCl 1N to 2.9
- The mixture was filled into containers and cooled to solidify
- The Firmness and viscosity (after dilution) were measured according to the protocol as described in the description.

| | % wt |
|---|---|
| Added water | 64.5 |
| Salt mixture (70% NaCl, 30% KCI) | 21.0 |
| Pectin powder (LC 810, Danisco) | 2.5 |
| Salt sensitive gum - alginate (Kelcosol, FMC biopolymer) | 8.0 |
| HCl 1N | 4.0 |
| Total | 100.0 |

| | |
|---|---|
| *^{a)} LC 810 (Danisco average DE typically 37, contains gelling pectin), contains ∼62% galacturonic acid (GalA).* | |

### Result

A firm gel was obtained with a pH of 2.9. The solidification took less than 30 minutes. The firmness was 124 g. After 10 times dilution in hot water a viscosity at 20 °C > 20 mPa.s was observed.

## Claims

1. A gelled food concentrate comprising:
• water
• a salt-sensitive gum,
• salt in an amount sufficient to keep the salt-sensitive gum in a salted-out state,
• gelling pectin, being all pectin with a degree of esterification of below 55, and wherein the gelling agent is dissolved in the water.

2. A gelled food concentrate according to claim 1, wherein the pH of the gelled food concentrate is lower than 3.5, preferably lower than 3.

3. A gelled food concentrate according to claim 1 or 2, further comprising calcium salt.

4. A gelled food concentrate according to any one of the preceding claims, which gelled food concentrate, after dilution in water at a weight ratio of 1:8 to 1:20 results in a ready-to-eat end product having a viscosity of higher than 15 mPa.s at 20°C, preferably at 50°C, more preferably at 70°C.

5. A gelled food concentrate according to any one of the preceding claims, wherein the salt-sensitive gum is selected from the group of gums consisting of alginate, gellan, iota-carrageenan, and mixtures thereof.

6. A gelled food concentrate according to any one of the preceding claims, wherein the salt-sensitive gum is present in an amount of from 0.1 to 35 wt%, based on the weight of the gelled food concentrate.

7. A gelled food concentrate according to anyone of the preceding claims, wherein the gelling pectin is present In an amount of from 0.7 to 10 wt%, based on the weight of the total water content and calculated as ((weight of galacturonic acid)/(weight of galacturonic acid + weight of total water content))*100%.

8. A gelled food concentrate according to anyone of the preceding claims comprising
a. 40 to 70 wt% of water based on the weight of the gelled food concentrate;
b. 0.5 to 20 wt% of salt-sensitive gum, based on the weight of the gelled food concentrate, preferably wherein the salt-sensitive gum is selected from the group of gums consisting of alginate, gellan, iota-carrageenan, and mixtures thereof;
c. 0.7 to 10 wt% of gelling pectin, based on the weight of the total water content and calculated as ((weight of galacturonic acid)/(weight of galacturonic acid + weight of total water content))*100%;
d. salt in an amount sufficient to keep the salt-sensitive gum in a salted-out state wherein the salt comprises NaCl and optionally KCI in a total amount of from 5 wt% to 40 wt% based on the weight of the total water content of the gelled food concentrate.

9. A gelled food concentrate according to anyone of the preceding claims, wherein potassium salt, preferably KCI, is present in an amount of from 0.6 to 20 wt%, based on the total water content of the concentrate, and calculated as (weight of salt / (weight of salt + weight of total water content))*100%, and Na⁺ ions and K⁺ ions are present in a ratio of [(Na⁺(Na⁺+K+))*100] of from 15 wt% to 95 wt%

10. A gelled food concentrate according to any one of the preceding claims, wherein calcium salt is present in an amount to provide Ca²⁺ cations in an amount of from 0.01 wt% to 3 wt%, based on the weight of the total water content of the gelled food concentrate.

11. A gelled food concentrate according to any one of the preceding claims, wherein the elastic modulus G' is higher than the viscous modulus G".

12. A gelled food concentrate according to any one of the preceding claims, further comprising non-gelatinised starch in an amount of from 5 to 30 wt%, based on the weight of the gelled food concentrate.

13. Process to prepare a gelled food according to any one of claims 1 to 12, the process comprising the steps of:
a. providing a mixture comprising water and gelling pectin,
b. heating the mixture from step a),
c. adding salt, not being calcium salt,
d. adding salt sensitive gum,
e. solidifying,
f. packaging,
to result in a gelled food concentrate.

14. A process according to claim 13, wherein the salt-sensitive gum is added after step c).

15. Use of a gelled food concentrate according to any one of claims 1 to 12 to provide a gravy, a soup, or a sauce.

## Patentansprüche

1. Gelförmiges Nahrungsmittelkonzentrat, umfassend:
• Wasser
• ein salzempfindliches Gummi,
• Salz in einer Menge, die ausreicht, das salzempfindliche Gummi in ausgesalzenem Zustand zu halten,
• Gelierpektin, wobei sämtliches Pektin einen Veresterungsgrad von unter 55 aufweist und wobei das Geliermittel in Wasser gelöst ist.

2. Gelförmiges Nahrungsmittelkonzentrat nach Anspruch 1, wobei der pH des gelförmigen Nahrungsmittelkonzentrats niedriger als 3,5, vorzugsweise niedriger als 3 ist.

3. Gelförmiges Nahrungsmittelkonzentrat nach Anspruch 1 oder 2, des Weiteren enthaltend Calciumsalz.

4. Gelförmiges Nahrungsmittelkonzentrat nach irgendeinem der vorhergehenden Ansprüche, wobei das gelförmige Nahrungsmittelkonzentrat nach der Verdünnung in Wasser in einem Gewichtsverhältnis von 1:8 bis 1:20 zu einem verzehrfertigen Endprodukt einer Viskosität von mehr als 15 mPa.s bei 20°C, vorzugsweise bei 50°C, bevorzugter bei 70°C, führt.

5. Gelförmiges Nahrungsmittelkonzentrat nach irgendeinem der vorhergehenden Ansprüche, wobei das salzempfindliche Gummi aus der Gruppe von Gummis ausgewählt ist, die aus Alginat, Gellan, Jota-Carrageen und Mischungen davon besteht.

6. Gelförmiges Nahrungsmittelkonzentrat nach irgendeinem der vorhergehenden Ansprüche, wobei das salzempfindliche Gummi in einer Menge von 0,1 bis 35 Gew.-%, bezogen auf das Gewicht des gelförmigen Nahrungsmittelkonzentrats, vorliegt.

7. Gelförmiges Nahrungsmittelkonzentrat nach irgendeinem der vorhergehenden Ansprüche, wobei das Gelierpektin in einer Menge von 0,7 bis 10 Gew.-%, bezogen auf das Gewicht des gesamten Wassergehalts und berechnet als ((Gewicht der Galacturonsäure)/(Gewicht der Galacturonsäure + Gewicht des gesamten Wassergehaltes))*100%, vorliegt.

8. Gelförmiges Nahrungsmittelkonzentrat nach irgendeinem der vorhergehenden Ansprüche, umfassend
a. 40 bis 70 Gew.-% Wasser, bezogen auf das Gewicht des gelförmigen Nahrungsmittelkonzentrats,
b. 0,5 bis 20 Gew.-% salzempfindliches Gummi, bezogen auf das Gewicht des gelförmigen Nahrungsmittelkonzentrats, wobei das salzempfindliche Gummi vorzugsweise aus der aus Alginat, Gellan, Jota-Carrageen und Mischungen davon bestehenden Gruppe ausgewählt ist,
c. 0,7 bis 10 Gew.-% Gelierpektin, bezogen auf das Gewicht des gesamten Wassergehalts und berechnet als ((Gewicht der Galacturonsäure)/(Gewicht der Galacturonsäure + Gewicht des gesamten Wassergehaltes))*100%,
d. Salz in einer ausreichenden Menge, um das salzempfindliche Gummi in ausgesalzenem Zustand zu halten, wobei das Salz NaCl und gegebenenfalls KCl in einer Gesamtmenge von 5 Gew.-% bis 40 Gew.-%, bezogen auf das Gewicht des gesamten Wassergehaltes des gelförmigen Nahrungsmittelkonzentrats, umfasst.

9. Gelförmiges Nahrungsmittelkonzentrat nach irgendeinem der vorhergehenden Ansprüche, wobei Kaliumsalz, vorzugsweise KCl, in einer Menge von 0,6 bis 20 Gew.-%, bezogen auf den gesamten Wassergehalt des Konzentrats und berechnet als (Gewicht vom Salz/(Gewicht vom Salz + Gewicht des gesamten Wassergehalts))*100% vorliegt und Na⁺-Ionen und K⁺-Ionen in einem Verhältnis von [(Na⁺/(Na⁺+K⁺))*100] von 15 Gew.-% bis 95 Gew.-% vorliegen.

10. Gelförmiges Nahrungsmittelkonzentrat nach irgendeinem der vorhergehenden Ansprüche, wobei das Calciumsalz in einer Menge vorliegt, um Ca²⁺-Kationen in einer Menge von 0,01 Gew.-% bis 3 Gew.-%, bezogen auf das Gewicht des gesamten Wassergehaltes des gelförmigen Nahrungsmittelkonzentrats, zu liefern.

11. Gelförmiges Nahrungsmittelkonzentrat nach irgendeinem der vorhergehenden Ansprüche, wobei das Elastizitätsmodul G' höher als das Viskositätsmodul G" ist.

12. Gelförmiges Nahrungsmittelkonzentrat nach irgendeinem der vorhergehenden Ansprüche, weiterhin umfassend nicht-gelatinierte Stärke in einer Menge von 5 bis 30 Gew.-%, bezogen auf das Gewicht des gelförmigen Nahrungsmittelkonzentrats.

13. Verfahren zur Herstellung eines gelförmigen Nahrungsmittels nach irgendeinem der Ansprüche 1 bis 12, wobei das Verfahren die Schritte umfasst:
a. Bereitstellen einer Mischung, die Wasser und Gelierpektin umfasst,
b. Erhitzen der Mischung von Schritt a),
c. Zugeben von Salz, das kein Calciumsalz ist,
d. Zugeben von salzempfindlichem Gummi,
e. Verfestigen,
f. Verpacken,
um zu einem gelförmigen Nahrungsmittelkonzentrat zu führen.

14. Verfahren nach Anspruch 13, wobei das salzempfindliche Gummi nach dem Schritt c) hinzugefügt wird.

15. Verwendung eines gelförmigen Nahrungsmittelkonzentrats nach irgendeinem der Ansprüche 1 bis 12 zur Bereitstellung einer Bratensauce, einer Suppe oder einer Soße.

## Revendications

1. Concentré alimentaire gélifié comprenant :
• de l'eau
• une gomme sensible à un sel,
• un sel dans une quantité suffisante pour maintenir la gomme sensible à un sel dans un état dessalé,
• une pectine gélifiante, la totalité de la pectine étant avec un degré d'estérification inférieur à 55, et dans lequel l'agent gélifiant est dissous dans l'eau.

2. Concentré alimentaire gélifié selon la revendication 1, dans lequel le pH du concentré alimentaire gélifié est inférieur à 3,5, de préférence inférieur à 3.

3. Concentré alimentaire gélifié selon la revendication 1 ou 2, comprenant de plus un sel de calcium.

4. Concentré alimentaire gélifié selon l'une quelconque des revendications précédentes, lequel concentré alimentaire gélifié, après dilution dans de l'eau à un rapport massique de 1:8 à 1:20 résulte en un produit final prêt à être consommé présentant une viscosité supérieure à 15 mPa.s à 20 °C, de préférence à 50 °C, encore mieux à 70 °C.

5. Concentré alimentaire gélifié selon l'une quelconque des revendications précédentes, dans lequel la gomme sensible à un sel est choisie dans le groupe de gommes constitué d'alginate, de gellane, d'iota-carraghénane, et de mélanges de ceux-ci.

6. Concentré alimentaire gélifié selon l'une quelconque des revendications précédentes, dans lequel la gomme sensible à un sel est présente dans une quantité de 0,1 à 35 % en masse, rapportée à la masse du concentré alimentaire gélifié.

7. Concentré alimentaire gélifié selon l'une quelconque des revendications précédentes, dans lequel la pectine gélifiante est présente dans une quantité de 0,7 à 10 % en masse, rapportée à la masse du contenu total d'eau et calculée comme ((masse d'acide galacturonique)/ (masse d'acide galacturonique + masse de contenu total d'eau))*100 %.

8. Concentré alimentaire gélifié selon l'une quelconque des revendications précédentes comprenant
a. de 40 à 70 % en masse d'eau rapportée à la masse du concentré alimentaire gélifié ;
b. de 0,5 à 20 % en masse de gomme sensible à un sel, rapportée à la masse du concentré alimentaire gélifié, de préférence dans lequel la gomme sensible à un sel est choisie dans le groupe de gommes constitué d'alginate, de gellane, d'iota-carraghénane, et de mélanges de ceux-ci ;
c. de 0,7 à 10 % en masse de pectine gélifiante, rapportée à la masse du contenu total d'eau et calculée comme ((masse d'acide galacturonique)/(masse d'acide galacturonique + masse de contenu total d'eau))*100 % ;
d. sel dans une quantité suffisante pour maintenir la gomme sensible à un sel dans un état dessalé dans lequel le sel comprend NaCl et éventuellement KCI dans une quantité totale de 5 % en masse à 40 % en masse rapportée à la masse du contenu total d'eau du concentré alimentaire gélifié.

9. Concentré alimentaire gélifié selon l'une quelconque des revendications précédentes, dans lequel du sel de potassium, de préférence KCI, est présent dans une quantité de 0,6 à 20 % en masse, rapportée au contenu total d'eau du concentré, et calculée comme (masse de sel/(masse de sel + masse de contenu total d'eau))*100 %, et des ions Na⁺ et des ions K⁺ sont présents dans un rapport de [(Na⁺/(Na⁺+K+))*100] de 15 % en masse à 95 % en masse.

10. Concentré alimentaire gélifié selon l'une quelconque des revendications précédentes, dans lequel du sel de calcium est présent dans une quantité pour fournir des cations Ca²⁺ dans une quantité de 0,01 % en masse à 3 % en masse, rapportée à la masse du contenu total d'eau du concentré alimentaire gélifié.

11. Concentré alimentaire gélifié selon l'une quelconque des revendications précédentes, dans lequel le module élastique G' est supérieur au module visqueux G".

12. Concentré alimentaire gélifié selon l'une quelconque des revendications précédentes, comprenant de plus de l'amidon non-gélatinisé dans une quantité de 5 à 30 % en masse, rapportée à la masse du concentré alimentaire gélifié.

13. Procédé de préparation d'un aliment gélifié selon l'une quelconque des revendications 1 à 12, le procédé comprenant les étapes de :
a. fourniture d'un mélange comprenant de l'eau et une pectine gélifiante,
b. chauffage du mélange de l'étape a),
c. addition de sel, n'étant pas un sel de calcium,
d. addition de gomme sensible à un sel,
e. solidification,
f. emballage,
pour résulter en un concentré alimentaire gélifié.

14. Procédé selon la revendication 13, dans lequel la gomme sensible à un sel est ajoutée après l'étape c).

15. Utilisation d'un concentré alimentaire gélifié selon l'une quelconque des revendications 1 à 12 pour fournir un jus de viande, une soupe, ou une sauce.
